# EUROPÄISCHE PATENTSCHRIFT

(11) **EP 3 737 874 B1**
(45) Veröffentlichungstag und Bekanntmachung des Hinweises auf die Patenterteilung: **07.01.2026**
(21) Anmeldenummer: 18795325.2
(22) Anmeldetag: 18.10.2018
(51) Int. Cl.: F16F 13/14

(54) **HYDRAULISCHE LAGERBUCHSE**
HYDRAULIC BEARING BUSH
COUSSINET DE PALIER HYDRAULIQUE

(30) Priorität: 11.01.2018 DE 102018200346
(43) Veröffentlichungstag der Anmeldung: 18.11.2020
(73) Patentinhaber: ContiTech Luftfedersysteme GmbH, 30165 Hannover (DE)
(72) Erfinder: GROTSCH, Sara, 30419 Hannover (DE); SANZ, Andre, 30419 Hannover (DE)
(74) Vertreter: Preusser, Andrea
(86) Internationale Anmeldenummer: PCT/EP2018/078473
(87) Internationale Veröffentlichungsnummer: WO 2019/137645

(56) Entgegenhaltungen:
- EP-A1- 0 296 062
- EP-A1- 1 282 788
- EP-A1- 1 378 682
- DE-A1- 10 310 633
- US-A- 4 763 884

## Beschreibung

Die Erfindung betrifft ein Verfahren zur Herstellung einer hydraulischen Lagerbuchse, insbesondere für Schienenfahrwerke, wobei die hydraulische Lagerbuchse folgende Merkmale aufweist:
- eine innere Buchse zur Aufnahme eines Lagerzapfens,
- einen ringförmigen Gummikörper, der die innere Buchse im Wesentlichen umfasst und über ihren äußeren Umfang anvulkanisiert ist, sowie
- zwei an beiden axialen Enden des Gummikörpers anvulkanisierte ringförmige Stützringe, vorzugsweise aus Metall
- ein äußeres ringförmiges Gehäuse, an dessen Innenumfang die Stützringe abgestützt sind, vorzugsweise an den beiden axialen Enden des äußeren ringförmigen Gehäuses, sowie
- mindestens zwei in Umfangsrichtung zwischen dem ringförmigen Gummikörper und dem ringförmigen Gehäuse ausgebildete, jeweils über Teilbereiche des Umfangs sich erstreckende und mit einer Hydraulikflüssigkeit befüllbare Kammern,
wobei die Kammern über mindestens einen Ausgleichs- und Drosselkanal miteinander verbunden sind, wobei die innere Buchse aus mindestens zwei koaxial ineinandergefügten hohlzylindrischen Körpern besteht und der Ausgleichs- und Drosselkanal im Wesentlichen im Verbindungsbereich (Kontaktbereich) der hohlzylindrischen Körper ausgebildet ist, wobei der Ausgleichs- und Drosselkanal schraubenförmig über mindestens eine Teillänge der inneren Buchse verläuft, wobei der ringförmige Gummikörper die koaxial ineinandergefügten hohlzylindrischen Körper nach außen abdichtet, wobei der Gummikörper Durchgänge oder Kanäle zur Verbindung zwischen dem im Verbindungsbereich der hohlzylindrischen Körper vorgesehenen Ausgleichs- und Drosselkanal und der jeweiligen befüllbaren Kammer aufweist.

Derartige hydraulische Lagerbuchsen zur Beeinflussung und/oder Einstellung des Dämpfungsverhaltens von Lagern an Fahrzeugen, insbesondere Schienenfahrzeugen, sind bereits in unterschiedlichen Ausführungen bekannt. Solche auch als Radsatzführungsbuchsen bezeichnete Lagerbuchsen werden zur elastischen Lagerung von beweglichen Teilen wie etwa den Teilen eines Laufwerks eines Fahrzeugs, insbesondere eines Schienenfahrzeugs eingesetzt.

In der Regel besteht ein solches Gummi-Metall-Lager aus einem innen liegenden Gummimetallelement, welches in einer metallenen Hülse aufgenommen ist. Die äußere metallene Hülse ist zum Beispiel mit der Karosserie des Fahrzeugs verbunden, während das innen liegende Gummimetallelement einen Zapfen aufnimmt, der zu einem Teil des Fahrwerks gehört.

Zwischen dem elastomeren Teil/ Gummiteil des Gummimetallelement und der metallenen Hülse als Gehäuseelement sind über Teilbereiche des Umfangs sich erstreckende und mit einem Hydraulikfluid/einer Hydraulikflüssigkeit befüllbare Kammern angeordnet, oft nierenförmig ausgebildet über einen Teilumfang des Lagers. Diese befüllbaren Kammern sind untereinander oder mit einer Ausgleichskammer durch mindestens einen Verbindungskanal verbunden.

Bei Belastung der hydraulischen Buchse wird durch das Einfedern des Gummiteiles eine Kammer verkleinert, so dass ein Teil der Hydraulikflüssigkeit in der Kammer durch den Verbindungskanal in die andere Kammer oder in die Ausgleichskammer strömt. Der Verbindungskanal wirkt dann als hydraulische Drossel, nämlich als Drosselkanal. Das Durchströmen des entsprechend ausgebildeten Drosselkanals erzeugt Dissipation und somit Dämpfungsarbeit.

Eine hydraulische Flüssigkeit wird somit in zumindest teilweise von dem gummielastischen Material umgebenen, etwa diametral gegenüberliegend angeordneten Kammern zum Bereitstellen weiterer schwingungsabsorbierender Eigenschaften bereitgestellt. Dabei dient der Verbindungskanal mit seiner Drosseleigenschaft als Schwingungstilger oder zum Bereitstellen einer dynamischen Steifigkeit in entsprechender Belastungsrichtung dient.

Die Dämpfungseigenschaften solcher hydraulischen Buchsen sind aufgrund ihrer Bauweise frequenzabhängig. Üblicherweise werden niederfrequente Schwingungen, also Schwingungen mit Frequenzen unterhalb von ca. 2 Hz, die im allgemeinen mit Amplituden von ca. 10 mm auftreten, stark gedämpft, während hochfrequente Schwingungen, also Schwingungen im Frequenzbereich oberhalb des genannten Wertes, aufgrund der Trägheit und Inkompressibilität der Hydraulikflüssigkeit und der Gummifeder nahezu ungedämpft durchgehen. Diese Eigenschaften macht man sich dadurch zu Nutze, dass durch die Ausgestaltung des Verbindungskanals die Dämpfung und die Steifigkeit frequenzabhängig eingestellt werden.

Das auf einem Schwingungsverhalten einer hydraulischen Flüssigkeitssäule beruhende elastische Verhalten kann dabei hinsichtlich der Steifigkeit und Dämpfung über die Länge des Verbindungskanals eingestellt werden. Bei einem langen Überlaufkanal können von der Buchse ausgehende Kräfte über die Hydraulikflüssigkeit und über den Überlaufkanal von einer in die andere Kammer nur dann hinreichend gut geleitet werden, wenn der zeitliche Abstand der Stöße bzw. Schwingungen groß, d.h. die Frequenz der Schwingungen klein ist. Erfolgen die mechanischen Belastungen dagegen mit einer hohen Frequenz, so kann aufgrund der Trägheit und Inkompressibilität der Hydraulikflüssigkeit, des zur Verfügung stehenden Kanalquerschnitts und der Kanallänge der Verbindungs- oder Überlaufkanal nicht schnell genug zwischen zwei aufeinanderfolgenden Stößen durchströmt bzw. überwunden werden, um durch einen Überlauf der belasteten Kammer zur unbelasteten Kammer eine Elastizität bereitzustellen.

Diesen Effekt macht man sich zunutze, um beispielsweise bei Schienenfahrzeugen bei schneller Fahrt und damit bei einer kurzen Abfolge von Unebenheiten auf der Schiene und dadurch auftretende mechanische Stöße eine größere Steifigkeit bereitzustellen. Dadurch wird die Fahrsicherheit bei hohen Geschwindigkeiten durch eine harte Lagerung und damit eine Vermeidung einer zu großen Weichheit gewährleistet.

Bei geringen Geschwindigkeiten, das heißt bei einer Kurvenfahrt und dergleichen ist dagegen eine geringe Steifigkeit von Vorteil und die entsprechende Weichheit wird dadurch erreicht, dass die entsprechende Hydraulikfluidsäule zwischen zwei aufeinander folgenden Stößen von einer Kammer in die andere Kammer überführt werden kann. Die Grenzfrequenz, die das steife Verhalten von dem dämpfenden Verhalten mit einer weichen Lagerung abgrenzt, wird durch die Kanallänge derart gegeben, dass je länger der Überlaufkanal ist, umso kleiner ist die Grenzfrequenz oberhalb der eine steife Lagerung mit einer harten Buchse zu beobachten ist.

Im Stand der Technik sind also hydraulische Radsatzführungsbuchsen bekannt, die aus einem Metall-Gummi-Körper zur Realisierung der statischen Steifigkeiten und zwei integrierten Kammern mit Verbindungskanal bestehen. Durch diesen definierten Verbindungskanal wird Fluid ausgetauscht und es ergibt sich eine unter verschiedenen Frequenzen veränderte dynamische Steifigkeit etwa in Fahrtrichtung. Der aktuelle Stand der Technik beschreibt eine hydraulische Radsatzführungsbuchse, bestehend aus einem Metall-Gummi-Körper zur Realisierung der statischen Steifigkeiten und zwei integrierten Kammern mit Verbindungskanal. Durch diesen definierten Verbindungskanal wird Fluid ausgetauscht und es ergibt sich eine je nach Belieben unter verschiedenen Frequenzen veränderte dynamische Steifigkeiten in Fahrtrichtung.

Aus der DE 103 10 633 A1 ist eine Buchse für ein Lager zur elastischen Verbindung von Teilen eines Laufwerks beschrieben. Die insbesondere für Schienenfahrzeuge bestimmte Buchse weist ein inneres Gehäuse auf, um das zur Bildung eines Ringspaltes radial beabstandet ein äußeres Gehäuse vorgesehen ist. In dem Ringspalt befindet sich ein gummielastisches Element, das zwei diametral gegenüberliegende Kammern begrenzt, die mit einer hydraulischen Flüssigkeit gefüllt sind und über einen als Schwingungstilger ausgebildeten Überlaufkanal miteinander verbunden sind. Der Überlaufkanal kann dabei wendelförmig ausgeführt sein und am Außen- und/oder Innenumfang der Buchse bzw. ihrer Gehäuseteile entlang geführt sein, läuft aber mindestens teilweise entweder durch das Innenteil oder Außenteil des Lagers.

Eine bevorzugte Ausführung der Buchse zeichnet sich dadurch aus, dass der Überlaufkanal zwischen einer Innenwandung des inneren Gehäuseteils und einer etwa wendelförmig in einen Außenbereich eines von der Buchse umschlossenen bolzenförmigen Elements eingebrachten Nut gebildet wird. Das Einbringen von Nuten an der Außenflächen des Lagerbolzens, wie hier das Einbringen einer umlaufenden Nut an einem Lenkerbolzen eines Achslenkers, ist aufwendig und verschiebt die Funktion bzw. die Konstruktion des Lagers teilweise in die Ausbildung des Achslenkers. Hierdurch ist ein Austausch oder Ersatz des Lagers nur mit erhöhtem Aufwand möglich.

Dokument US4763884 offenbart ebenfalls eine gattungsgemäße Lagerbuchse.

Der Erfindung stellt sich daher die Aufgabe, die gattungsgemäße Lagerbuchse so zu gestalten, dass ein dynamisches Steifigkeitsverhalten durch eine Veränderung der Länge des Verbindungskanals auf einfache Weise vorgegeben werden kann. Die hydraulische Lagerbuchse soll dabei im niedrigen Frequenzbereich weiche Steifigkeiten und bei definierten höheren Frequenzen hohe Steifigkeiten in Fahrtrichtung realisieren, eine günstige Fertigung durch Vermeidung von Kerbwirkung bei kraftführenden Bauteilen erreichen und dadurch den Einsatz günstiger Materialien, einfache Gestaltungen und einfache Fertigungsverfahren erlauben. Die hydraulische Radsatzführungsbuchse soll weiche Steifigkeiten bei niedriger Frequenz und hohe Steifigkeiten bei höheren Frequenzen in Fahrtrichtung realisieren.

Gelöst wird die Aufgabe durch ein besonderes Herstellverfahren der hydraulischen Lagerbuchse.

Dabei besteht die innere Buchse aus mindestens zwei koaxial ineinandergefügten hohlzylindrischen Körpern und der Ausgleichs- und Drosselkanal ist im Wesentlichen im Verbindungsbereich, also im Kontaktbereich der hohlzylindrischen Körper ausgebildet. Durch die Konstruktion eines so angeordneten Verbindungskanals sind sehr einfache Variantenausführungen für variable statische und dynamische Steifigkeiten möglich, da die Kontaktbereiche, d.h. die einander zugewandten Oberflächen der hohlzylindrischen Körper vor deren Zusammenbau auf einfache Weise bearbeitet werden können. Es lassen sich beispielsweise Nuten in die Oberflächen einbringen oder auch Erhöhungen oder Vertiefungen, die nach dem Zusammenbau Hohlräume bilden, durch die ein Ausgleichs-und Drosselkanal geformt wird. Auch kann hier leicht ein "Gleichteile-Prinzip" aufgebaut werden, indem beispielsweise einer der hohlzylindrischen Körper für verschiedene Lagerarten gleich ausgebildet ist.

Dies ermöglicht auch sehr einfache Varianten ausführungen für variable statische und dynamische Steifigkeiten.

Die innere Buchse ist aus einem hohlzylindrischen Körper mit einer aufgepressten äußeren Hülse ausgebildet, vorzugsweise aus einer mit einer äußeren Kunststoffhülse versehenen metallischen Buchse. Eine solche Kunststoffhülse lässt sich im oben genannten Sinne sehr leicht über ein abrasives oder formendes Verfahren bearbeiten und kann dann einfach auf die metallische Buchse aufgepresst/aufgeschoben werden. Im Sinne des Gleichteile-Prinzips kann beispielsweise die innere metallische Buchse gleich bleiben und die Kunststoffhülse jeweils angepasst werden.

Der Ausgleichs- und Drosselkanal ist als Ausnehmung oder Vertiefung der Innenoberfläche des jeweils äußeren hohlzylindrischen Körpers bzw. der Hülse ausgebildet. Wie oben bereits dargelegt, ergibt sich durch eine solche Ausbildung eine einfache Herstellung des Ausgleichs-oder Drosselkanals.

Der Ausgleichs- und Drosselkanal vedrläuft schraubenförmig über mindestens eine Teillänge der inneren Buchse. Hierdurch ist die Länge des Kanals im weiten Rahmen anpassbar und damit die Dämpfung. Der Verbindungskanal kann etwa als ebene Schraube oder in Form einer ineinander gedrehten Mehrfachschraube ausgeführt werden. Dies erlaubt ebenso ein platzsparende Anordnung des Verbindungskanals wie eine Ausbildung des Verbindungskanals im Wesentlichen kreisbogenförmig oder aus kreisbogenförmigen Teilkanälen bestehend. So können z. B. die jeweiligen Enden des Kanalsystems mit den zwei gegenüberliegenden Kammern durch zwei oder mehrere Kanäle verbunden werden.

Der ringförmige Gummikörper dichtet die koaxial ineinandergefügten hohlzylindrischen Körper nach außen ab, wobei der Gummikörper Durchgänge oder Kanäle zur Verbindung zwischen dem im Verbindungsbereich der hohlzylindrischen Körper vorgesehenen Ausgleichs- und Drosselkanal und der jeweiligen befüllbaren Kammer aufweist. Durch die Vulkanisation und Verbindung der beiden hohlzylindrischen Körper, also zum Beispiel einer Kunststoffhülse und einem metallischen Innenring, ist keine zusätzliche Abdichtung des Kanalsystemes erforderlich. Eine konsequente Abdichtung des Kanalsystems intern aber auch nach außen ist so gegeben. Eine einfache luftfreie Befüllung ist ebenfalls möglich

Eine solche Ausbildung ist besonders im Zusammenspiel mit einem vorteilhaften Verfahren zur Herstellung einer hydraulischen Lagerbuchse geeignet, bei der die innere Buchse aus einem inneren hohlzylindrischen Körper mit einer aufgepressten äußeren Kunststoffhülse ausgebildet ist, an deren Innenoberfläche der Ausgleichs- und Drosselkanal als Ausnehmung oder Vertiefung ausgebildet ist dadurch gekennzeichnet, dass die äußere Kunststoffhülse durch ein 3-D-Druckverfahren erzeugt wird, dann auf den inneren hohlzylindrischen Körper aufgepresst und danach der ringförmige Gummikörper anvulkanisiert wird.

In besonderer Weise vorteilhaft ist, wie bereits dargelegt, die Anwendung der erfindungsgemäß hergestellten hydraulischen Lagerbuchse als Radsatzführungsbuchse innerhalb eines Fahrwerks für ein Schienenfahrzeug. Hier ergibt sich bei einem Bauteil mit sehr geringen Abmessungen die Möglichkeit einer hohen Beeinflussung der Steifigkeit abhängig von der Frequenz der einwirkenden Belastungen/Kräfte.

Weitere Vorteile ergeben sich durch eine hier sehr einfache Möglichkeit der Modifikation der nierenförmigen Kammern und im Verhältnis zum Gummimetallteil bzw. zur Gummipolstergeometrie. Ebenfalls erreicht man eine einfache Variation der dynamischen Steifigkeit und Steifigkeitsverhältnis Cₓ statisch zu Cₓ dynamisch. Je nach geforderten dynamischen Steifigkeiten sind mehrere Kanallagen, Kanalquerschnitte und verschiedene Kanallängen im Kanalsystem möglich. Der Einsatz von Materialien wie Aluminium oder Kunststoff ist ebenfalls möglich.

Zudem sind unterschiedlichen Flüssigkeiten mit unterschiedlichen Zähigkeiten / Viskositäten einsetzbar. Aufgrund von Temperaturunempfindlichkeit findet aktuell Glykol Anwendung. Die erfindungsgemäße Ausbildung erlaubt auch eine einfache, kostengünstige und dennoch prozesssichere Montage.

Bei der hydraulischen Lagerbuchse kann eine Variation der statischen Steifigkeit durch Modifikation der Nieren, d.h. der befüllbaren hydraulischen Kammern und der Gummipolstergeometrie erfolgen. Je nach geforderten dynamischen Steifigkeiten sind unterschiedliche Kanalquerschnitte und verschiedene Kanallängen im Kanalsystem möglich. Des Weiteren ist die Verwendung verschiedener hydraulische Flüssigkeiten mit unterschiedlichen Viskositäten bei definierten Temperaturen möglich. Die Befüllung ist durch eine geeignete Befüllbohrung mittels einer Befüllvorrichtung, evtl. auch unter Vakuumerzeugung möglich.

Anhand eines Ausführungsbeispiels soll die Erfindung näher erläutert werden.

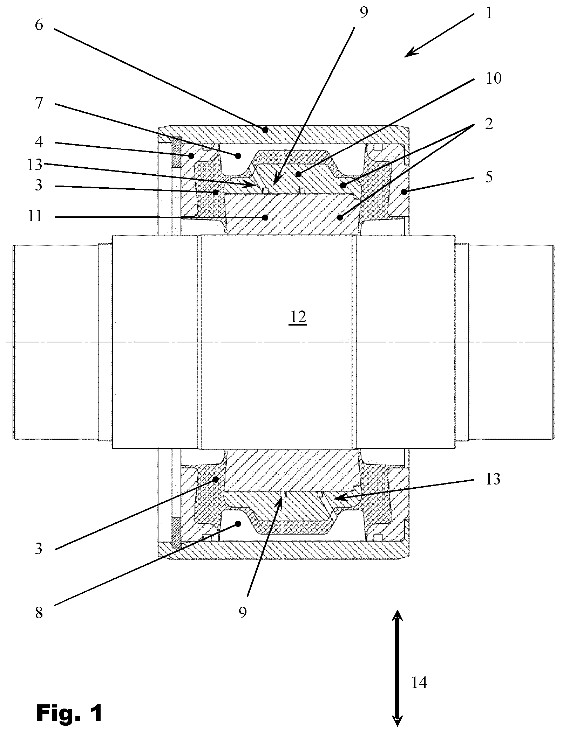

Fig. 1 zeigt prinzipiell eine hydraulische Lagerbuchse 1 für ein hier nicht näher dargestelltes Schienenfahrwerk. Die hydraulische Lagerbuchse weist eine innere Buchse 2 zur Aufnahme eines Lagerzapfens 12 auf, ebenso einen ringförmigen Gummikörper 3, der die innere Buchse 2 im Wesentlichen umfasst und über ihren äußeren Umfang mit ihr durch Vulkanisation verbundenen ist, sowie zwei an beiden axialen Enden des Gummikörpers anvulkanisierte ringförmige, metallische Stützringe 4 und 5.

Die hydraulische Lagerbuchse weist weiterhin ein äußeres ringförmiges Gehäuse 6 auf, an dessen Innenumfang, nämlich an den beiden axialen Enden des Gehäuses, die Stützringe 4 und 5 abgestützt und mit entsprechenden Sicherungsringen fixiert sind.

Die Fig. 1 zeigt ebenfalls, dass die hydraulische Lagerbuchse 1 zwei in Umfangsrichtung zwischen dem ringförmigen Gummikörper und dem ringförmigen Gehäuse ausgebildete, jeweils über Teilbereiche des Umfangs sich erstreckende und mit einer Hydraulikflüssigkeit befüllbare Kammern 7 und 8 aufweist, die über einen Ausgleichs- und Drosselkanal 9 miteinander verbunden sind. Die Fahrtrichtung 14 liegt hier in der oder parallel zur Hochachse der Zeichnung und die "nierenförmig" ausgebildeten Kammern werden im Betrieb der Lagerbuchse durch radiale Kräfte mehr oder weniger verformt, so dass sich die darin befindliche Hydraulikflüssigkeit über den Ausgleichs- und Drosselkanal 9 in die jeweils andere Kammer strömen kann. Die innere Buchse 2 bzw. hier die äußere Hülse 10 der inneren Buchse 2 weist dazu natürlich entsprechende Zulaufbohrungen 13 auf, die den jeweiligen Kanalanfang mit den entsprechenden Kammern verbinden. Entsprechende und mit den Zulaufbohrungen 13 korrespondierende Bohrungen und Zuläufe weist natürlich auch der Gummikörper 3 auf.

Die innere Buchse 2 besteht bei der erfindungsgemäßen Ausführung aus zwei koaxial ineinandergefügten hohlzylindrischen Körpern, nämlich aus einer mit einer äußeren Kunststoffhülse 10 versehenen metallischen Buchse 11.

Der Ausgleichs- und Drosselkanal 9 ist hierbei als Ausnehmung der Innenoberfläche Kunststoffhülse 10 ausgebildet und verläuft schraubenförmig über eine Teillänge der inneren Buchse. Der Ausgleichs- und Drosselkanal 9 ist somit im Wesentlichen im Verbindungsbereich bzw. Kontaktbereich von Kunststoffhülse 10 und metallischer Buchse 11 ausgebildet.

### Bezugszeichenliste:

- 1: Hydraulische Lagerbuchse
- 2: Buchse
- 3: Gummikörper
- 4: Stützring
- 5: Stützring
- 6: ringförmiges Gehäuse
- 7: befüllbare Kammer
- 8: befüllbare Kammer
- 9: Ausgleichs- und Drosselkanal
- 10: Kunststoffhülse
- 11: Metallische Buchse
- 12: Lagerzapfen
- 13: Zulaufbohrung
- 14: Fahrtrichtung

## Patentansprüche

1. Verfahren zur Herstellung einer hydraulischen Lagerbuchse, insbesondere für Schienenfahrwerke, wobei die hydraulische Lagerbuchse folgende Merkmale aufweist:
- eine innere Buchse (2) zur Aufnahme eines Lagerzapfens (12),
- einen ringförmigen Gummikörper (3), der die innere Buchse (2) im Wesentlichen umfasst und über ihren äußeren Umfang anvulkanisiert ist, sowie
- zwei an beiden axialen Enden des Gummikörpers anvulkanisierte ringförmige Stützringe (4, 5), vorzugsweise aus Metall,
- ein äußeres ringförmiges Gehäuse (6), an dessen Innenumfang die Stützringe (4, 5) abgestützt sind, vorzugsweise an den beiden axialen Enden des äußeren ringförmigen Gehäuses, sowie
- mindestens zwei in Umfangsrichtung zwischen dem ringförmigen Gummikörper (3) und dem ringförmigen Gehäuse (6) ausgebildete, jeweils über Teilbereiche des Umfangs sich erstreckende und mit einer Hydraulikflüssigkeit befüllbare Kammern (7, 8), wobei die Kammern (7, 8) über mindestens einen Ausgleichs- und Drosselkanal (9) miteinander verbunden sind, wobei die innere Buchse (2) aus mindestens zwei koaxial ineinandergefügten hohlzylindrischen Körpern (10, 11) besteht und der Ausgleichs-und Drosselkanal (9) im Wesentlichen im Verbindungsbereich (Kontaktbereich) der hohlzylindrischen Körper (10, 11) ausgebildet ist, wobei der Ausgleichs- und Drosselkanal (9) schraubenförmig über mindestens eine Teillänge der inneren Buchse (2) verläuft , wobei der ringförmige Gummikörper (3) die koaxial ineinandergefügten hohlzylindrischen Körper (10, 11) nach außen abdichtet, wobei der Gummikörper Durchgänge oder Kanäle zur Verbindung zwischen dem im Verbindungsbereich der hohlzylindrischen Körper vorgesehenen Ausgleichs- und Drosselkanal (9) und der jeweiligen befüllbaren Kammer (7, 8) aufweist,
bei der die innere Buchse aus einem inneren hohlzylindrischen Körper mit einer aufgepressten äußeren Kunststoffhülse ausgebildet ist, an deren Innenoberfläche der Ausgleichs- und Drosselkanal als Ausnehmung oder Vertiefung ausgebildet ist **dadurch gekennzeichnet, dass** die äußere Kunststoffhülse durch ein 3-D-Druckverfahren erzeugt wird, dann auf den inneren hohlzylindrischen Körper aufgepresst und danach der ringförmige Gummikörper anvulkanisiert wird.

## Claims

1. A method for the manufacture of a hydraulic bearing bushing, in particular for rail running gear, wherein the hydraulic bearing bushing has the following characteristics:-an inner bushing (2) to accommodate a bearing pin (12),- a ring-shaped rubber body (3) which substantially encompasses the inner bushing (2) and is vulcanized over its outer circumference, and - two annular support rings vulcanized at both axial ends of the rubber body (4, 5), preferably of metal, - an outer ring-shaped housing (6), on the inner circumference of which the support rings (4, 5) are supported, preferably at the two axial ends of the outer ring-shaped housing, as well as at least two chambers formed in the circumferential direction between the ring-shaped rubber body (3) and the ring-shaped housing (6), each extending over parts of the circumference and being filled with a hydraulic fluid (7, 8), wherein the chambers (7, 8) are connected to each other via at least one compensating and throttling channel (9), wherein the inner bushing (2) consists of at least two hollow cylindrical bodies (10, 11) coaxially joined into each other and the compensating and throttling channel (9) is formed essentially in the connecting region (contact area) of the hollow cylindrical bodies (10, 11),
wherein the compensating and throttling channel (9) are helically shaped over at least one part length of the inner bushing (2) , wherein the ring-shaped rubber body (3) seals the coaxially interconnected hollow cylindrical bodies (10, 11) outwards, wherein the rubber body has passages or channels for the connection between the compensating and throttling channel (9) provided in the connection area of the hollow cylindrical bodies and the respective fillable chamber (7, 8),
in which the inner bushing is formed from an inner hollow cylindrical body with a pressed-on outer plastic sleeve, on the inner surface of which the equalization and throttle channel is formed as a recess or recess, **characterized in that** the outer plastic sleeve is produced by a 3D printing process, then pressed onto the inner hollow cylindrical body and then the ring-shaped rubber body is vulcanized.

## Revendications

1. Une méthode de fabrication d'une bague de roulement hydraulique, en particulier pour les mécanismes de roulement sur rails, dans laquelle la bague hydraulique de roulement possède les caractéristiques suivantes : - une bague intérieure (2) pour accueillir une goupille de roulement (12), - un corps en caoutchouc en forme d'anneau (3) qui englobe largement la bague intérieure (2) et est vulcanisé sur sa circonférence extérieure, et - deux anneaux de support annulaires vulcanisés aux deux extrémités axiales du corps en caoutchouc (4, 5), de préférence en métal, - un boîtier extérieur en forme d'anneau (6), sur la circonférence intérieure duquel sont soutenus les anneaux de support (4, 5), de préférence aux deux extrémités axiales du boîtier extérieur en forme d'anneau, ainsi qu'au moins deux chambres formées dans la direction circonférentielle entre le corps en caoutchouc en forme d'anneau (3) et le boîtier en forme d'anneau (6), chacune s'étendant sur une partie de la circonférence et étant remplie d'un fluide hydraulique (7, 8), où les chambres (7, 8) sont reliées entre elles par au moins un canal de compensation et de régulation (9), où la bague intérieure (2) est constituée d'au moins deux corps cylindriques creux (10, 11) assemblés coaxialement l'un dans l'autre et où le canal compensateur et de régulation (9) est formé essentiellement dans la région de connexion (zone de contact) des corps cylindriques creux (10, 11), où le canal compensateur et de régulation (9) est formé hélicologiquement sur au moins une partie de la longueur de la bague intérieure (2), où le corps en caoutchouc en forme d'anneau (3) scelle vers l'extérieur les corps cylindriques creux coaxiaux interconnectés (10, 11), où le corps en caoutchouc possède des passages ou des canaux pour la connexion entre le canal compensateur et le canal d'accélération (9) prévus dans la zone de jonction des corps cylindriques creux et la chambre remplissable respective (7, 8),
dans laquelle la bague intérieure est formée à partir d'un corps cylindrique creux intérieur avec une gaine extérieure en plastique pressée, sur la surface intérieure de laquelle le canal d'égalisation et de papillon est formé en une cavité ou une cavité, **caractérisée par** la production de la gaine plastique extérieure par un procédé d'impression 3D, puis pressée sur le corps cylindrique creux intérieur, puis le corps en caoutchouc en forme d'anneau est vulcanisé.
